# EUROPÄISCHE PATENTSCHRIFT

(11) **EP 2 305 022 B1**
(45) Veröffentlichungstag und Bekanntmachung des Hinweises auf die Patenterteilung: **20.02.2013**
(21) Anmeldenummer: 10008735.2
(22) Anmeldetag: 21.08.2010
(51) Int. Cl.: A01D 43/08, A01F 29/10

(54) **Häckselaggregat für selbstfahrende Erntemaschinen**
Shredder device for self-propelled harvesters
Dispositif de hachage pour moissonneuses automobiles

(30) Priorität: 30.09.2009 DE 102009043704
(43) Veröffentlichungstag der Anmeldung: 06.04.2011
(73) Patentinhaber: CLAAS Saulgau GmbH, 88348 Bad Saulgau (DE)
(72) Erfinder: Rauch, Hans, 88348 Bad Saulgau (DE)

(56) Entgegenhaltungen:
- DE-A1- 10 046 603
- DE-A1- 10 327 309
- DE-A1- 19 502 670
- DE-A1-102005 018 635
- DE-U1-202008 012 224

## Beschreibung

Die Erfindung betrifft ein Häckselaggregat für selbstfahrende Erntemaschinen nach dem Oberbegriff des Anspruchs 1.

Die Häckselaggregate von Feldhäckslern, insbesondere die der selbstfahrenden Erntemaschinen, sind auf Grund stetig anwachsender Leistungsanforderungen, hervorgerufen durch größere Arbeitsbreiten der Maisgebisse oder Pick-up's, und damit notwendigerweise auch in Verbindung mit größeren Leistungen der Antriebsmotore, hohen Anforderungen, hinsichtlich der auf die Arbeitsorgane einwirkenden Kräfte und Drehmomente, unterworfen. Hinzu kommt, dass die Betriebsbedingungen häufig abrupten Änderungen unterworfen sind. Derartige abrupte Änderungen können verursacht werden durch einen diskontinuierlichen Gutfluss, welcher durch das Häckselaggregat hindurchgeht. Auch gibt es diesbezüglich erhebliche Unterschiede von Futterart zu Futterart, zum Beispiel der Wechsel von Mais zu Grünfutter, welches ebenfalls zu wechselnden und unterschiedlichen Einsatzbedingungen führt.

Die Häckselaggregate müssen diesen wechselnden Bedingungen und Anforderungen standhalten. Aus diesem Grunde sind Häckselaggregate so aufgebaut, dass der Einzugsspalt zwischen den Einzugswalzen und der Pressspalt zwischen den Presswalzen unterschiedlich groß sein können. Dieses kommt der Forderung nach unterschiedlichen Massendurchsatzströmen im laufenden Häckselbetrieb bei möglichst konstanter Schnittlänge des Häckselgutes nach.

Die Schnittlänge des Häckselgutes wiederum ist abhängig von der Drehzahl der mit Messern besetzten Häckseltrommel und auch von der Zuführgeschwindigkeit des Gutstroms, welcher den Einzugs- und Pressspalt der vorgelagerten Einzugs- und Presswalzen des Einzugsgehäuses passieren muss. Daher ist es üblich, sowohl die Drehzahl der Häckseltrommel, als auch die Einzugsgeschwindigkeit des Gutstroms, den unterschiedlichen Betriebsbedingungen anzupassen.

Ungeachtet dieser Anpassungsmöglichkeiten ist der Einzugs- und Pressvorgang des Gutstroms hochdynamischen Veränderungen ausgesetzt, so dass die Einzugs- und Pressorgane, welche als Einzugs- und Presswalzen in dem der Häckseltrommel vorgelagerten Einzugsgehäuse gelagert sind, sich fortlaufend auf momentane Änderungen der Spaltweiten zwischen der jeweiligen Ober- und Unterwalze einstellen müssen. Diesem Umstand wird in bekannter weise dadurch Rechnung getragen, dass die Oberwalzen der Einzugs- und Pressorgane möglichst unabhängig voneinander, momentan gegenüber ihrer Unterwalze eine Lageveränderung durchführen können, d.h. momentan ihre Spaltweite ändern können.

Da diese Walzen dem Wesen nach massebehaftet sind, ist eine derartige momentane Anpassung stets mit Beschleunigungskräften einhergehend, die als Lagerreaktionen in den Lagern der Walzen selber und in den Gehäusewänden abgestützt werden müssen, die aber auch teils durchschlagen auf die Antriebs-, Führungs- und Verstellelemente der Oberwalzen. Je abrupter derartige Beschleunigungsvorgänge ablaufen, desto größer die momentane Beschleunigung und desto größer die momentanen Beschleunigungskräfte.

Es ist daher erforderlich, derartige Beschleunigungsvorgänge, welche auf die verstellbaren Walzen, und zumeist sind dieses die Oberwalzen, einwirken, zu bedämpfen. Dieses dient einerseits dem Kappen von Beschleunigungsspitzen, aber andererseits auch der Verbesserung der Laufruhe des Häckselaggregates insgesamt. Hier setzt die Aufgabe der Erfindung an mit dem Ziel, eine weitere Verbesserung gegenüber dem Stand der Technik zu erzielen.

Ein Häckselaggregat gemäß dem Oberbegriff des Anspruches 1 ist aus der DE 103 27 309 A1 bekannt. Als Stoßdämpfer kommt ein ölhydraulischer Stoßdämpfer zum Einsatz, der bedingt durch Verschmutzung und mechanische Belastung in seiner Lebensdauer begrenzt ist. Die DE 103 27 309 A1 schlägt zur Reduzierung der Störanfälligkeit und zur Erhöhung der Lebensdauer vor, die Kolbenstange des ölhydraulischen Stoßdämpfers mit einer Druckluftzufuhr zu verbinden, um das Eindringen von Schmutz zu verhindern.

Aufgabe der Erfindung ist es ein Häckselaggregat zu schaffen, welches sich den unterschiedlichen Betriebsbedingungen schnell und besser anpassen kann.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Ein Häckselaggregat nach der Erfindung ist mit wenigstens einem geregelten elektrohydraulischen Stoßdämpfer mit ferromagnetischen Schwebeteilchen in seinem Dämpfungsmedium ausgestattet, der zugleich einem elektromagnetischen Feld zur Veränderung der Dämpfungskonstanten ausgesetzt ist.

Der magnetische Fluss des elektromagnetischen Feldes kann dabei verändert werden, so dass dadurch die Dämpfungskonstante des Stossdämpfers verändert, bzw. variiert werden kann, und sich dabei optimal an die veränderten Betriebsbedingungen anpassen kann.

Normalerweise bewegen sich diese Eisenteilchen ungehindert und ohne erkennbare Struktur in der Flüssigkeit des Stossdämpfers umher. Wird jedoch in einer nahegelegenen Erregerspule, die sich beispielsweise im Kolben des Stossdämpfers befindet, eine Spannung angelegt, so dass der magnetische Fluss die Öl-Eisenteilchenemulsion durchflutet, ordnen sich die Teilchen dicht aneinander und lassen so das Öl dickflüssiger erscheinen, welches somit Einfluss auf die Viskosität der Öl-Eisenteilchenemulsion nimmt. Die Folge ist, dass der Stoßdämpfer dadurch schwergängiger wird, welches bedeutet, dass sich seine Dämpfungskonstante verändert hat. Die Spule kann Bestandteil eines Regelkreises sein, dessen Führungsgröße durch einen Beschleunigungsaufnehmer bestimmt werden kann. Das Ausgangssignal des Beschleunigungsaufnehmers wird einem µ-Controller als Eingangssignal zugeführt, so dass dieser daraus ein Ausgangssignal generieren kann, welches den Magnetisierungsstrom der Erregerspule entsprechend einem vorgegebenen Sollwert für die Dämpfungskonstante und daraus abgeleitet die Führungsgröße als Errergerstrom für die Erregerspule verändert. Die Regelung läuft stufenlos und innerhalb von Millisekunden ab..

Der Sollwert kann beispielsweise aus einer im Speicher des µ-Controllers hinterlegten Funktion abgeleitet werden oder auch extern vom Fahrer des Feldhäckslers durch manuellen Eingriff in die Steuerung vorgegeben werden. Dabei kann der Sollwert, und damit die Dämpfungskonstante des elektrohydraulischen Stoßdämpfers, erfindungsgemäß als Funktion der momentanen Spaltweite verändert werden. Dazu ist der Verstellmechanismus der Oberwalzen mit einem Wegaufnehmer ausgestattet, der ebenfalls ein Ausgangssignal liefert, welches am µ-Controller als Eingangssignal anliegt. Aus den beiden Eingangssignalen, dem des Beschleunigungsaufnehmers und dem des Wegaufnehmers kann der µ-Controller somit die optimale Dämpfungskonstante und damit den Sollwert des Erregerstroms für die Erregerspule ermitteln.

### Ausführungsbeispiel

- Fig.1: ein vereinfacht dargestelltes Häckselaggregat in einer Seitenansicht mit minimal eingestelltem Einzugs- und Pressspalt.
- Fig.2: ein vereinfacht dargestelltes Häckselaggregat in einer Seitenansicht mit etwa maximal eingestelltem Einzugs- und Pressspalt.
- Fig.3: einen vergrößert dargestellten Ausschnitt aus Fig.1
- Fig.4: einen vergrößert dargestellten Ausschnitt aus Fig.2
- Fig.6: prinzipielle Darstellung des Regelkreises

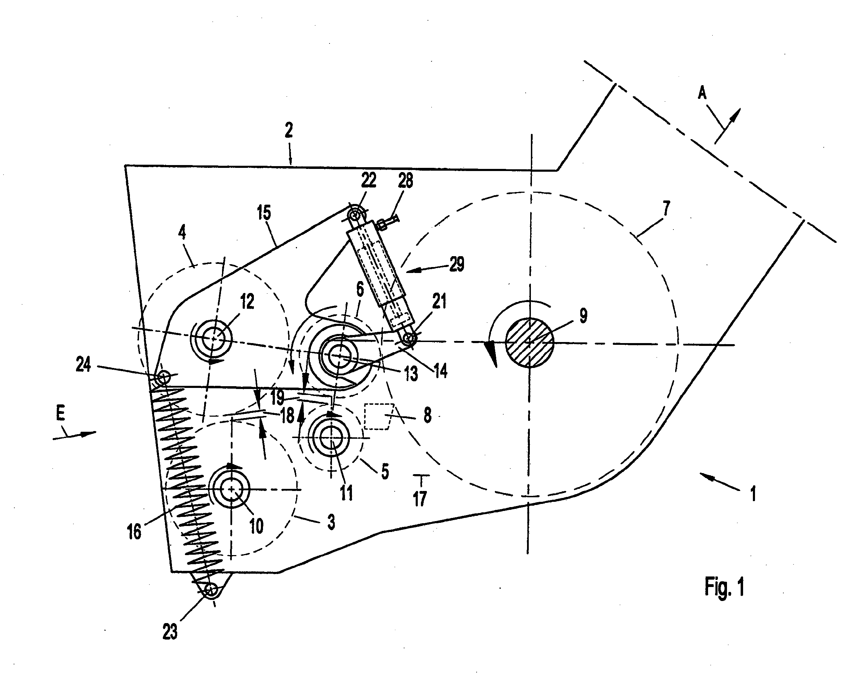

In Fig.1 ist ein vereinfacht dargestelltes Häckselaggregat 1 in einer Seitenansicht mit minimal eingestellter Einzugsspaltweite 18 und minimal eingestellter Pressspaltwelte 19 dargestellt. In dem Häckslergehäuse 2 ist die Antriebswelle 9 mit der mit Häckslermessern bestückten Häckseltrommel 7 in den Seitenwänden dreh- und antraibbar gelagert. Aus Gründen der Übersichtlichkeit ist die Häckseltrommel 7 lediglich durch ihre Außenkontur als Hüllkrels dargestellt. Die Gegenschneide 8 ist ebenfalls an den Seitenwänden des Häckslergehäuses 2 abgestützt.

Häckselaggregate 1 dieser Art sind dabei gleichzeitig als Häckslergebläse ausgebildet, so dass der zu häckselnde Gutstrom, der durch den Einzugsspalt im Einzugsbereich E in bekannter weise in das Häckslergehäuse eintritt, nach dem Passieren der Häckseltrommel das Häckselaggregat durch den Ausgang A, ebenfalls in bekannter weise wieder verlässt.

Im vorderen und offenen Einzugsbereich E des Häckslergehäuses 2 befinden sich die untere Einzugswalze 3 und obere Einzugswalze 4, welche den Einzugsspalt mit seiner Einzugsspaltweite 18,18' definieren. Zwischen den Einzugswalzen 3 und 4 und der Häckseltrommel 7 befinden sich die untere Presswalze 5 und obere Presswalze 6, die den Pressspalt mit seiner Pressspaltweite 19,19' definieren.

Die untere Einzugswalze 3 und die untere Presswalze 5 sind fest in den Lagern 10 und 11 der seitlichen Gehäusewände des Häckslergehäuses 2 eingebunden, wohin gegen die obere Einzugswalze 4 und die obere Presswalze 6 in den Lagern 12 und 13 in festgelegtem Abstand zueinander, jedoch schwenkbeweglich, in einer beidseitig außerhalb des Häckslergehäuses 2 in je einer Lagerschwinge 15 gelagert sind. Die Schwenkbeweglichkeit bezieht sich dabei zum einen auf eine mögliche Schwenkbewegung um die Achse des Lagers 13 und anderseits auch um eine weitere Schwenkbeweglichkeit um die Schwenkachse des Anschlagspunktes 21 der Einfachschwinge 14, wobei die Einfachschwinge 14 beidseits des Häckslergehäuses 2 außerhalb der Seitenwände 17 fest an diesen drehbar gelagert ist. Einfachschwinge 14 und Lagerschwinge 15 sind gleichzeitig in dem Lager 13 schwenkbeweglich zueinander gekoppelt.

Die Lagerschwinge 15 ist mittels einer Zugfeder 16, die zum einen in dem Anschlagpunkt 23 am Häckslergehäuses 2 und zum anderen im Anschlagpunkt 24 an der Lagerschwinge 15 selbst befestigt ist, mit einem Drehmoment um die Achse des Lagers 13, aber auch mit einem Drehmoment um die Schwenkachse des Anschlagpunktes 21 beaufschlagt.

Ebenfalls im Anschlagpunkt 21 ist ein elektrohydraulischer Stoßdämpfer 29 drehbeweglich um diesen angeschlagen, wobei dieser am anderen Ende in dem Anschlagpunkt 22 drehbeweglich mit der Lagerschwinge 15 angeschlagen und verbunden ist. Die Drehrichtungen der rotierend angetriebenen Einzugswalzen 3,4 bzw. Presswalzen 5 und 6, sowie die der Häckseltrommel 7, sind durch Drehrichtungspfeile gekennzeichnet.

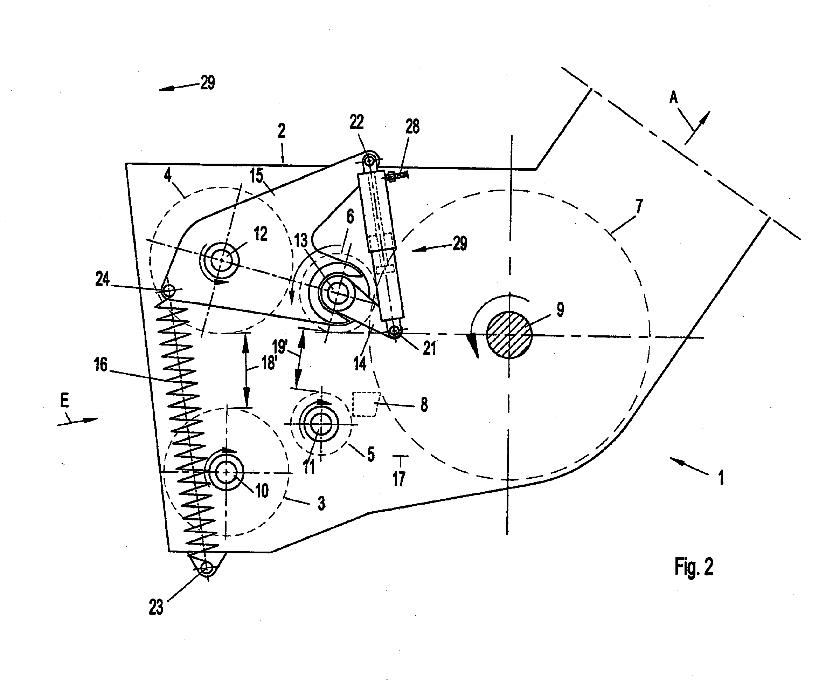

In Fig. 2 ist analog Fig.1 die gleiche Situation dargestellt, nunmehr aber mit etwa maximalen Spaltweiten, d.h. maximaler Einzugsspaltweite 18' und maximaler Pressspaltweite 19'. Dieses entspricht einer Situation im laufenden Häckselbetrieb, bei dem der durch den Einzugsspalt des Einzugbereichs E eintretende Gutstrom des noch zu häckselnden Futters infolge seiner teils durch die Einzugswalzen 3,4 bzw. Presswalzen 5,6 verdichteten Masse, Aktionskräfte auf die Einzugswalzen 3,4 bzw. Presswalzen 5,6 ausübt, welche als Reaktionskräfte auf die Zugfeder 16 bzw. den Anschlagpunkt 21 am Häckslergehäuse 2 abgestützt werden. Dabei erfährt die Zugfeder 16 entsprechend den momentanen Gegebenheiten eine Verlängerung gegenüber der in Fig. 1 dargestellten Situation, welches auch eine Vergrößerung der Vorspann- bzw. Reaktionskräfte bedeutet, wie weiter oben angesprochen.

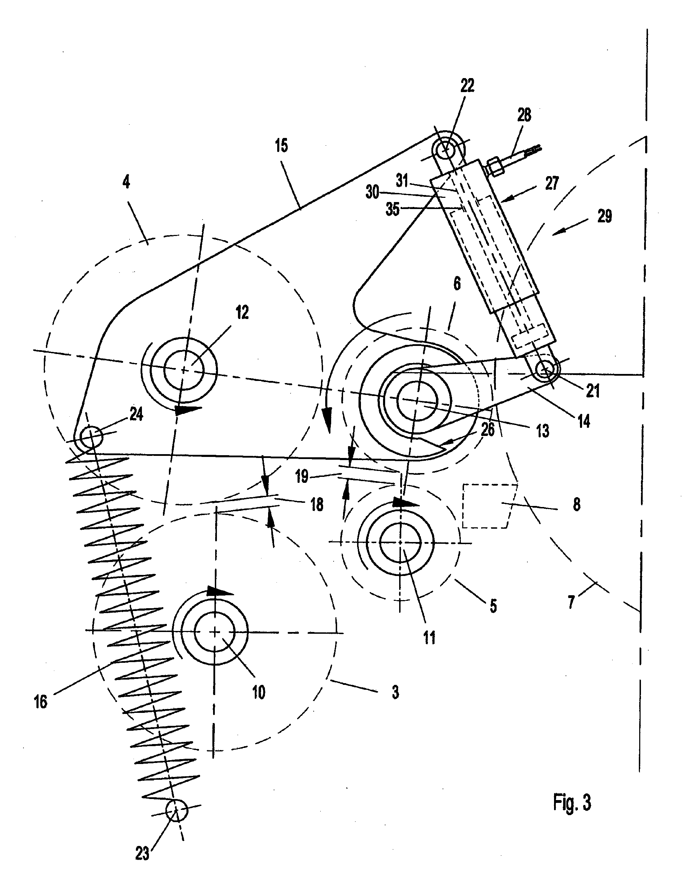

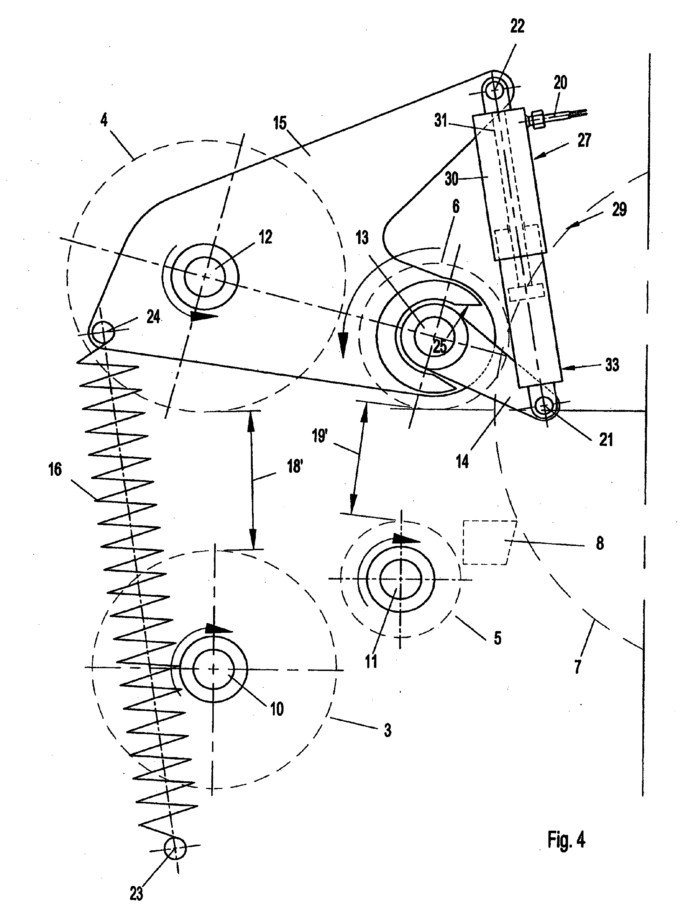

In. Fig. 3 und Fig. 4 sind die wesentlichen Elemente der Fig. 1 bzw. Fig.2 zur besseren Verdeutlichung vergrößert dargestellt. Um den Gelenkpunkt im Lager 13 sind zwei Anschläge, ein oberer Anschlag 25 und ein unterer Anschlag 26 als fester Bestandteil der Lagerschwinge 15 angeordnet. Diese Anschläge 25,26 umschließen die Einfachschwinge 14 derart, dass diese zwar Schwenkbewegungen um die Drehachse des Lagers 13 zulassen, jedoch eben nur im Rahmen dessen, was die Lage der Anschläge zulassen. Somit können die obere Einzugswalze 4 und die obere Presswalze 6, solange der Anschlag 25 an der Einfachschwinge 14 anliegt, nur gemeinsam nach oben, dem laufenden Gutstrom durch seine verdrängende Wirkung verursachenden Aktionskraft folgend, ausweichen. Die sich der Bewegungsrichtung entgegenstellende Reaktionskraft ist somit maßgeblich bestimmt durch die Federkräfte der Zugfedern und durch die durch die Beschleunigungskräfte infolge der Massenträgheit der Einzugs- und Presswalzen.

Dem Vorgang der Gutstromförderung werden somit Schwingungsvorgänge überlagert, die um Resonanzkatastrophen zu vermeiden, bedämpft werden. Bedämpft werden diese Beschleunigungsvorgänge von einem elektrohydraulischen Stoßdämpfer 29, wobei diese Bedämpfung bekanntlich auf Reibung beruht.

Stellt sich nunmehr die Situation ein, dass bei angehobenen Presswalzen der Gutstrom in seiner Masse momentan rückläufig ist, hingegen die Presswalzen noch kein rückläufiges absenken erlauben, so kann die vorgelagerte obere Einzugswalze bereits eine abwärtsgerichtete Schwenkbewegung um die Achse des Lagers 13 ausführen, innerhalb der Grenzen, die der untere Anschlag 26 zulässt. Die Folge dieser Ausgestaltung der Anbringung des elektrohydraulischen Stoßdämpfers 29 ist, dass sowohl die aufwärtsgerichteten, als auch die abwärtsgerichteten und teilweise entkoppelten Bewegungsvorgänge beider Oberwalzen 4 und 6, von der bedämpfenden Wirkung des Stoßdämpfers erfasst werden.

Der elektrohydraulische Stoßdämpfer 29 ist von der Erregerspule 27 umgeben, welche ein magnetisches Feld im Innenraum des elektrohydraulischen Stoßdämpfers 29 erzeugt. Der elektrische Kabelanschluss 28 führt zu einem nicht näher dargestellten Steuergerät, welches die Regelung der Stromversorgung für die Erregerspule 27 beinhaltet.

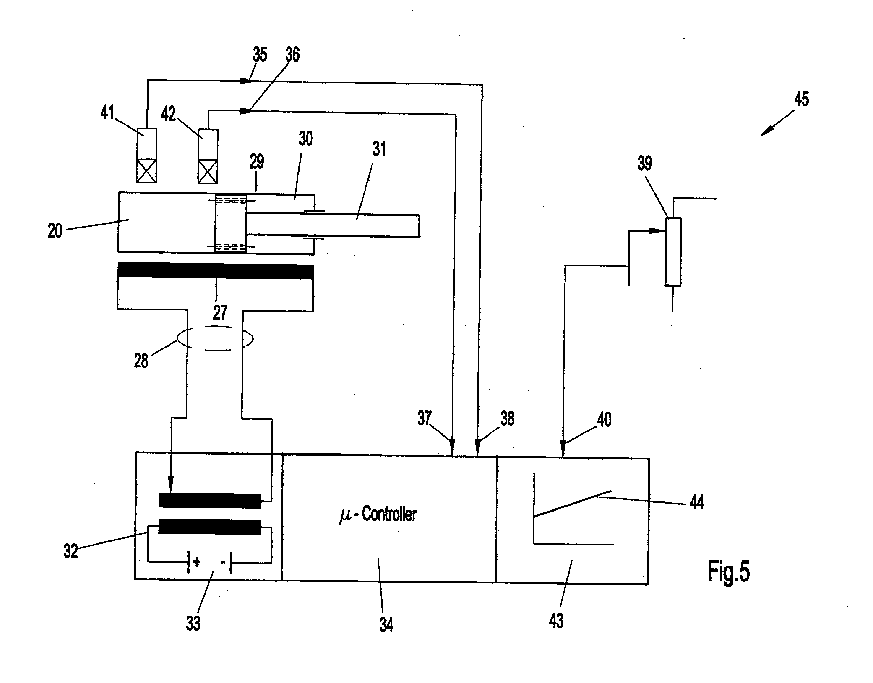

Fig.5 zeigt den prinzipiellen Aufbau des Regelkreises 45 für den elektrohydraulischen Stoßdämpfer 29, dessen Kolbenstangeraum 30 von der Kolbenstange 31 durchsetzt ist, und dessen Inneraum mit einem Dämpfungsmedium 20 mit ferromagnetischen Schwebeteilchen gefüllt ist. Die Funktion eines hydraulischen Stoßdämpfers ist dem Fachmann bekannt, so dass ihre Beschreibung an dieser Stelle entbehrlich ist. Dem elektrohydraulischen Stossdämpfer 29 ist eine Erregerspule 27 zugeordnet, die mittels einer elektrischen Kabelverbindung 28 mit dem Spannungsregler 32 und Stromregler 33 in Wirkverbindung steht. An dem elektrohydraulischen Stossdämpfer 29 an liegen weiterhin ein Beschleunigungsaufnehmer 41, der ein erstes Ausgangssignal 35 und ein Wegaufnehmer 42, der ein zweites Ausgangssignal 36 generiert. Das erste Ausgangssignal 35 liegt als erstes Eingangssignal 37 und das zweite Ausgangssignal 36 liegt als zweites Eingangssignal 38 an dem µ-Controller 34 an. Ein externer Sollwertgeber 39 in der Kabine liefert ein drittes Eingangssignal 40, welches dem µ-Controller 34 eine Dämpfungsfunktion 44 vorgibt, welche im Sollwertspeicher 43 hinterlegt ist. Der µ-Controller 34 vergleicht die Eingangssignale 37 und 38 in Verbindung mit der Sollwertvorgabe, resultierend aus der Dämpfungsfunktion 44 im Sinne eines Regelkreises und. daraus abgeleitet wird die momentan anliegende Spannung U an der Erregerspule 27, welche den momentanen magnetischen Fluss, den der Erregerspule 27 bzw. die magnetische Durchflutung des Dämpfungsmediums 20 und damit die Viskosität des Dämpfungsmediums 20 und damit wiederum die momentane Dämpfungskonstante des elektrohydraulischen Stossdämpfers 29 bestimmt.

### Bezugszeichenliste

- 1: Häckselaggregat
- 2: Häckslergehäuse
- 3: untere Einzugswalze
- 4: obere Einzugswalze
- 5: untere Presswalze
- 6: obere Presswalze
- 7: Häckseltrommel
- 8: Gegenschneide
- 9: Antriebswelle
- 10: Lager
- 11: Lager
- 12: Lager
- 13: Lager
- 14: Einfachschwinge
- 15: Lagerschwinge
- 16: Zugfeder
- 17: Seitenwand
- 18,18': Einzugsspaltweite
- 19,19': Pressspaltweite
- 20: Dämpfungsmedium
- 21: Anschlagpunkt
- 22: Anschlagpunkt
- 23: Anschlagpunkt
- 24: Anschlagpunkt
- 25: oberer Anschlag
- 26: unterer Anschlag
- 27: Erregerspule
- 28: elektrische Kabelverbindung, Kabelanschluss
- 29: elektrohydraulischer Stoßdämpfer
- 30: Kolbenstangenraum
- 31: Kolbenstange
- 32: Spannungsregler
- 33: Stromregler
- 34: µ-Controller
- 35: erstes Ausgangssignal
- 36: zweites Ausgangssignal
- 37: erstes Eingangssignal
- 38: zweites Eingangssignal
- 39: externer Sollwertgeber
- 40: drittes Eingangssignal
- 41: Beschleunigungsaufnehmer
- 42: Wegaufnehmer
- 43: Sollwertspeicher
- 44: Dämpfungsfunktion
- 45: Regelkreis
- A: Ausgang
- E: Einzugsbereich, Eingang, Eingangsseite

## Patentansprüche

1. Häckselaggregat (1) für selbstfahrende Erntemaschinen, bestehend aus einem Häckslergehäuse (2) mit wenigstens zwei Einzugswalzen, einer oberen und einer unteren Einzugswalze (3,4), welche die Einzugsspaltweite (18,18') begrenzen, und wenigstens zwei Presswalzen, einer oberen und einer unteren Presswalze (5,6), welche die Pressepaltweite (19,19') begrenzen, mit einer umlaufend rotierenden mit Messern besetzten Häckseltrommel (7), wobei die Einzugswalzen (3,4) und die Presswalzen (5,6) sich dem momentanen Gutstrom folgend durch unterschiedliche Einzugsspaltweiten (18, 18') bzw. Pressspaltweiten (19,19') anpassen können, und wobei die Anpassbewegungen der Einzugs- und Presswalzen (3,4,5,6) von wenigstens einem Stoßdämpfer gedämpft werden, wobei die obere Einzugswalze (4) und die obere Presswalze (6) in Lagern (12, 13) in festgelegtem Abstand, jedoch schwenkbeweglich in einer Lagerschwinge (15) gelagert sind, **dadurch gekennzeichnet, dass** der wenigstens eine geregelte Stoßdämpfer als elektrohydraulischer Stoßdämpfer (29) ausgebildet ist, der mit ferromagnetischen Schwebeteilchen in seinem Dämpfungsmedium ausgestattet ist, der zugleich einem elektromagnetischen Feld zur Veränderung der Dämpfungskonstanten als Funktion der momentanen Spaltweite ausgesetzt ist, mit dem die Auslenkung der Lagerschwinge (15) zwischen einem oberen Anschlag (25) und einem unteren Anschlag (16) dämpfbar ist.

2. Häckselaggregat (1) nach Anspruch 1, **dadurch gekennzeichnet, dass** der elektrohydraulische Stossdämpfer eine elektrische Erregerspule (27) zur Veränderung des elektromagnetischen Feldes zur magnetischen Durchflutung des Dämpfungsmediums (20) aufweist.

3. Häckselaggregat (1) nach Anspruch 1, **dadurch gekennzeichnet, dass** die Erregerspule (27) Bestandteil eines µ-Controllers (34) eines geregelten Regelkreises (45) ist.

4. Häckselaggregat (1) nach Anspruch 1, **dadurch gekennzeichnet, dass** die Führungsgröße des Regelkreises durch einen Beschleunigungsaufnehmer (41), der die Presswalzenbewegungen erfasst, generiert wird und dessen Ausgangssignal (35) einem µ-Controller (34) als Eingangssignal (38) zugeführt wird.

5. Häckselaggregat (1) nach Anspruch 1, **dadurch gekennzeichnet, dass** die Führungsgröße des Regelkreises (45) durch einen Wegaufnehmer (42), der Presswalzenbewegungen erfasst, generiert wird und dessen Ausgangssignal (36) einem µ-Controller (34) als Eingangssignal (37) zugeführt wird,

6. Häckselaggregat (1) nach Anspruch 1, **dadurch gekennzeichnet, dass** die Führungsgröße des Regelkreises (45) durch einen Beschleunigungsaufnehmer (41) und einem Wegaufnehmer (42), der Presswalzenbewegungen erfasst, generiert wird und dessen Ausgangssignale (35,36) einem µ-Controller (34) als Eingangssignale (37,38) zugeführt werden.

7. Häckselaggregat (1) nach Anspruch 1, **dadurch gekennzeichnet, dass** der Sollwert des Regelkreises (45) als Regelgröße für die Dämpfungskonstante aus einer im Sollwertspeicher (43) hinterlegten Funktion abgeleitet wird.

8. Häckselaggregat (1) nach Anspruch 1, **dadurch gekennzeichnet, dass** der Sollwert des Regelkreises (45) von dem µ-Controller (34) aus einer hinterlegten Dämpfungsfunktion (44) abgeleitet wird.

9. Häckselaggregat (1) nach Anspruch 1, **dadurch gekennzeichnet, dass** der Sollwert der Dämpfungskonstanten des elektrohydraulischen Stossdämpfers (29) vom Fahrer des Feldhäckslers in der Kabine mittels eines externen Sollwertgebers (39) verändert werden kann.

## Claims

1. A chopping device (1) for self-propelled harvesters comprising a chopper housing (2) having at least two intake rollers, an upper and a lower intake roller (3, 4), which define the intake gap width (18, 18'), and at least two pressing rollers, an upper and a lower pressing roller (5, 6), which define the pressing gap width (19, 19'), with a rotating chopping drum (7) fitted with blades, wherein the intake rollers (3, 4) and the pressing rollers (5, 6) can adapt to each other in accordance with the instantaneous flow of material by different intake gap widths (18, 18') and pressing gap widths (19, 19') respectively and wherein the adaptation movements of the intake and pressing rollers (3, 4, 5, 6) are damped by at least one shock absorber, wherein the upper intake roller (5) and the upper pressing roller (6) are mounted in mountings (12, 13) at a fixed spacing but pivotably movably in a mounting rocking arm (15), **characterised in that** the at least one regulated shock absorber is in the form of an electrohydraulic shock absorber (29) which is equipped with ferromagnetic suspended particles in its damping medium which at the same time is exposed to an electromagnetic field for altering the damping constant as a function of the instantaneous gap width, with which the deflection of the mounting rocking arm (15) between an upper abutment (25) and a lower abutment (16) can be damped.

2. A chopping device (1) according to claim 1 **characterised in that** the electrohydraulic shock absorber has an electric exciter coil (27) for altering the electromagnetic field for producing a magnetic flux in the damping medium (20).

3. A chopping device (1) according to claim 1 **characterised in that** the exciter coil (27) is a component part of a p-controller (34) of a regulated regulating circuit (45).

4. A chopping device (1) according to claim 1 **characterised in that** the control parameter of the regulating circuit is generated by an acceleration sensor (41) which detects the pressing roller movements and whose output signal (35) is fed to a µ-controller (34) as an input signal (38).

5. A chopping device (1) according to claim 1 **characterised in that** the control parameter of the regulating circuit (45) is generated by a travel sensor (42) which detects the pressing roller movements and whose output signal (36) is fed to a µ-controller (34) as an input signal (37).

6. A chopping device (1) according to claim 1 **characterised in that** the control parameter of the regulating circuit (45) is generated by an acceleration sensor (41) and a travel sensor (42) which detects pressing roller movements and whose output signals (35, 36) are fed to a µ-controller (34) as input signals (37, 38).

7. A chopping device (1) according to claim 1 **characterised in that** the reference value of the regulating circuit (45) is derived as a regulating parameter for the damping constant from a function stored in the reference value memory (45).

8. A chopping device (1) according to claim 1 **characterised in that** the reference value of the regulating circuit (45) is derived by the µ-controller (34) from a stored damping function (44).

9. A chopping device (1) according to claim 1 **characterised in that** the reference value of the damping constant of the electrohydraulic shock absorber (49) can be altered by the driver of the forage harvester in the cab by means of an external reference value sender (39).

## Revendications

1. Dispositif de hachage (1) pour machines de récolte automotrices, composé d'un carter de hacheur (2) contenant au moins deux rouleaux d'alimentation, un rouleau d'alimentation supérieur et un rouleau d'alimentation inférieur (3, 4), qui limitent la largeur de fente d'alimentation (18, 18'), et au moins deux rouleaux de pressage, un rouleau de pressage supérieur et un rouleau de pressage inférieur (5, 6), qui limitent la largeur de fente de pressage (19, 19'), un tambour de hachage (7) entraîné en rotation et garni de lames, les rouleaux d'alimentation (3, 4) et les rouleaux de pressage (5, 6) pouvant s'adapter au flux de produit instantané par différentes largeurs de fente d'alimentation (18, 18'), respectivement largeurs de fente de pressage (19, 19'), et les mouvements d'adaptation des rouleaux d'alimentation et de pressage (3, 4, 5, 6) étant amortis par au moins un amortisseur, le rouleau d'alimentation supérieur (4) et le rouleau de pressage supérieur (6) étant montés à distance définie dans des paliers (12, 13), mais de manière pivotante dans un palier oscillant (15), **caractérisé en ce que** ledit au moins un amortisseur régulé est réalisé sous la forme d'un amortisseur électrohydraulique (29) qui est équipé de particules ferromagnétiques en suspension dans son milieu d'amortissement et qui est exposé en même temps à un champ électromagnétique permettant de faire varier la constante d'amortissement en fonction de la largeur de fente instantanée et d'amortir l'excursion du palier oscillant (15) entre une butée supérieure (25) et une butée inférieure (16).

2. Dispositif de hachage (1) selon la revendication 1, **caractérisé en ce que** l'amortisseur électrohydraulique comporte une bobine électrique d'excitation (27) pour faire varier le champ électromagnétique servant à produire un flux magnétique à travers le milieu d'amortissement (20).

3. Dispositif de hachage (1) selon la revendication 1, **caractérisé en ce que** la bobine d'excitation (27) fait partie d'un µ-contrôleur (34) d'une boucle d'asservissement régulée (45).

4. Dispositif de hachage (1) selon la revendication 1, **caractérisé en ce que** la grandeur de référence de la boucle d'asservissement est générée par un capteur d'accélération (41) qui détecte les mouvements des rouleaux de pressage et dont le signal de sortie (35) est envoyé à un µ-contrôleur (34) en tant que signal d'entrée (38).

5. Dispositif de hachage (1) selon la revendication 1, **caractérisé en ce que** la grandeur de référence de la boucle d'asservissement (45) est générée par un capteur de déplacement (42) qui détecte les mouvements des rouleaux de pressage et dont le signal de sortie (36) est envoyé à un µ-contrôleur (34) en tant que signal d'entrée (37).

6. Dispositif de hachage (1) selon la revendication 1, **caractérisé en ce que** la grandeur de référence de la boucle d'asservissement (45) est générée par un capteur d'accélération (41) et par un capteur de déplacement (42) qui détecte les mouvements des rouleaux de pressage et dont les signaux de sortie (36) sont amenée à un µ-contrôleur (34) en tant que signaux d'entrée (37, 38).

7. Dispositif de hachage (1) selon la revendication 1, **caractérisé en ce que** la valeur de consigne de la boucle d'asservissement (45) est dérivée en tant que grandeur réglée pour la constante d'amortissement d'une fonction stockée dans la mémoire de valeurs de consigne (43).

8. Dispositif de hachage (1) selon la revendication 1, **caractérisé en ce que** la valeur de consigne de la boucle d'asservissement (45) est dérivée par le µ-contrôleur (34) d'une fonction d'amortissement (44) stockée.

9. Dispositif de hachage (1) selon la revendication 1, **caractérisé en ce que** la valeur de consigne de la constante d'amortissement de l'amortisseur électrohydraulique (29) peut être modifiée par le conducteur de l'ensileuse, dans la cabine, au moyen d'un transmetteur de valeur de consigne externe (39).
